# EUROPEAN PATENT APPLICATION

(11) **EP 2 306 058 A1**
(43) Date of publication of application: **06.04.2011**
(21) Application number: 09768809.7
(22) Date of filing: 29.06.2009
(51) Int. Cl.: F16L 15/06, B23G 7/00, B23G 1/22, B21H 3/02

(54) **A LEAD-IN TYPE INTERFERENCE FIT PIPELINE EXTERNAL THREAD**

(30) Priority: 27.06.2008 CN 200810039705
(71) Applicant: Shanghai Pan-China Fastening System Co., Ltd., Shanghai 201206 (CN)
(72) Inventor: XIAO, Jinan, Shanghai 201206 (CN); ZHOU, Jun, Shanghai 201206 (CN)
(74) Representative: Pons Ariño, Angel
(86) International application number: PCT/CN2009/072498
(87) International publication number: WO 2009/155884

(57) **Abstract**

A lead-in type interference fit pipeline external thread (10), it is able to achieve its seal while non-use of packing, in which the effective thread is a cone-shape pipe thread, at least two complete variation convex thread (11) is in full-length of said effective thread, the middle diameter of said variation convex thread (11) is amount of pre-interference fit more than that of its corresponding rules thread (12), the tooth side (100) of said variation convex thread (11) is a convex arc. The invention also involves the manufacturing method and manufacturing device of a lead-in type interference fit pipeline external thread (10), and a lead-in type interference fit pipe thread pair pipe fitting.

## Description

### FIELD OF THE INVENTION

The disclosure relates to a lead-in type interference fit pipeline external thread, a manufacturing method and a manufacturing device thereof and a pipe product with a lead-in type interference fit pipe thread pair.

### BACKGROUND

When a prior seal pipe thread is used to implement a sealing connection, it needs to meet many strict conditions, as described in an article named "the understanding and analyzing of the criterion of the pipe thread" published in the Aerospace Standardization, Issue 3, 2005, in which a USA standard seal pipe thread with a thread angle of 60_{°} is divided into a general seal pipe thread and a dry seal pipe thread, the general seal pipe thread is an economic type seal pipe thread and a sealing packing is used in pipe products with thread pair; and the dry seal pipe thread is a precise type seal pipe thread which can be sealed without the sealing packing. A tolerance zone distribution of addendum and dedendum of the dry seal pipe thread is arranged according to the interference fit, to ensure that the root and the crest are in contact with the flank first during assembling, so that it eliminates the possibility of a clearance existing at the crest and the root. A tolerance zone distribution of addendum and dedendum of the general seal pipe thread is arranged according to the transition fit, so that the root and the crest can be in contact with the flank first, can be in contact with the flank simultaneously or can be in contact with the flank later during the assembling, even the crest and the root can not be in contact with the flank after the assembling, so that a clearance exists. The contacts between the crest, the root and the flank are all line contact, so the sealing packing is needed to clog the clearance existing at the crest and the root of the general seal pipe thread. A single essential tolerance of the dry seal pipe thread is more strict than that of the general seal pipe thread.

An axial thread rolling machine for a pipeline connection external thread is revealed in the Chinese patent NO. 200310111695.2, in which the pipeline external thread for seal connection is machined by a forming technique of rolling, so the surface of the pipe thread is smooth, uniform and has a high strength, this preferably resolves the problems of running, emitting, dropping and leaking at the adapter of the pipeline in use, while allowing the pipeline machining quick and efficient. However, the number of turns of the working thread of the sealing pipe thread manufactured by such machine is the same as that of the working thread of the general cutting thread, and a little packing is needed for the connection of the pipe products with thread pair.

### SUMMARY

An object of the disclosure is to provide a lead-in type interference fit pipeline external thread, during a process of using it with an internal thread to constitute a pipe product with thread pair, a good tightness can be achieved without any packing, also a manufacturing method and a manufacturing device for the lead-in type interference fit pipeline external thread, and a pipe product with a lead-in type interference pipe thread pair constituted by the lead-in type interference fit pipeline external thread and the internal thread are provided.

To achieve said object, according to one aspect of the disclosure, the lead-in type interference fit pipeline external thread has a useful thread which is a taper pipe thread, **characterized in that**, there are at least two turns of complete variation convex threads in the full length of the useful thread, a pitch diameter of the variation convex thread is larger than a corresponding reference standard taper thread by a predetermined interference fit amount, a flank of the variation convex thread is a convex arc surface.

The further characteristic of the lead-in type interference fit pipeline external thread is that, a standard conicity of the reference standard taper thread is 1:16, and the interference fit amount is 0.01 mm-0.03mm.

The further characteristic of the lead-in type interference fit pipeline external thread is that, the number of turns of the useful thread is 8, and the variation convex threads are the third and fourth turns of threads from a small end of the useful thread, or the fourth and fifth turns of threads.

According to one aspect of the disclosure, a pipe product with a lead-in type interference fit pipe thread pair comprises a lead-in type interference fit pipeline external thread and an internal thread engaged therewith, a useful thread of the lead-in type interference fit pipeline external thread is a taper pipe thread, **characterized in that**, there are at least two turns of variation convex threads in the full length of the useful thread, a pitch diameter of the variation convex thread is larger than that of a corresponding reference standard taper thread by a predetermined interference fit amount, a flank of the variation convex thread is a convex arc surface, and the flank of the variation convex thread of the lead-in type interference fit pipeline external thread is in surface contact with a flank of the internal thread, so that the lead-in type interference fit pipeline external thread and the internal thread are in interference fit.

The further characteristic of the pipe product with a lead-in type interference fit pipe thread pair is that, a standard conicity of the reference standard taper thread is 1:16, and the interference fit amount is 0.01 mm-0.03mm.

The further characteristic of the pipe product with a lead-in type interference fit pipe thread pair is that, the number of turns of the useful thread is 8, the number of turns of the useful thread of the internal thread is not less than 6, and the variation convex threads are the third and fourth turns of threads from a small end of the useful thread, or the fourth and fifth turns of threads.

According to another aspect of the disclosure, a thread rolling machine for manufacturing above mentioned lead-in type interference fit pipeline external thread comprises a machine base, a head stock arranged on a side of a upper portion of the machine base, a chuck plate arranged on a forward end of the head stock, a moving means arranged on the other side of the upper portion of the machine base and a thread rolling wheel plate arranged on the moving means, the thread rolling wheel plate comprises a fixed bracket, at least one thread rolling wheel arranged on the fixed bracket and a location adjustment mechanism for adjusting a radial location of the thread rolling wheel on the fixed base, and a useful thread of the thread rolling wheel is a taper pipe thread, **characterized in that**, there are at least two turns of variation concave threads in the full length of the useful thread, a pitch diameter of the variation concave thread is smaller than that of a corresponding reference standard taper thread by a predetermined interference fit amount, a flank of the variation concave thread is a concave arc surface,

The further characteristic of the thread rolling machine is that, a standard conicity of the reference standard taper thread is 1:16, and the interference fit amount is 0.01 mm-0.03mm.

According to another aspect of the disclosure, the characteristic of a method for manufacturing above mentioned lead-in type interference fit pipeline external thread is that, the above mentioned thread rolling wheel is used to roll a workpiece, so that the lead-in type interference fit pipeline external thread can be formed at an adapter of the workpiece.

According to another aspect of the disclosure, the characteristic of a method for manufacturing the lead-in type interference fit pipeline external thread is that, a recessed portion corresponding to the variation convex thread of the lead-in type interference fit pipeline external thread and a concave arc surface corresponding to the flank of the variation convex thread are formed on a chasing tool for cutting thread, the recessed portion is recessed 0.01 mm-0.03mm, then the workpiece is cut to form the lead-in type interference fit pipeline external thread at the adapter of the workpiece.

The advantageous effect of the disclosure is that: the pipe thread connection is formed by the method of lead-in type interference fit, wherein the forward end of the pipe product is formed as the external thread engaged therewith through a non-uniform thread having a changeable outside diameter on the thread rolling wheel, so that the arc surface of the external thread and the slope surface of the internal thread are in interference fit when implementing the pipe connection, the thread on the thread rolling wheel is not a uniform taper thread, and the outside diameter of the variation concave thread is smaller than the origin standard thread by the predetermined interference fit amount, to ensure in the machined lead-in type interference fit pipeline external thread, at least two turns of variation convex threads have the pitch diameter larger than that of the origin standard thread, so that during the pipe connection process, the variation convex thread of the lead-in type interference fit pipeline external thread and the internal thread are in interference fit, to largely increase a reliability of a sealing performance and a connection performance; further, because of using a rolling technology by the basis of a metal's plastic deformation theory, the surface of the machined external thread is smooth, uniform and has a high strength; and because of a fiber flow of the metal's internal organization is not cut off and formed to be continuous, a compact metal strength layer is formed on the metal layer through an extruded strengthening, to largely increase and improve the strength and using performance of the external thread; further more, a flank of the general cutting thread is a linear type, but the flank of the variation convex thread of the lead-in type interference fit pipeline thread manufactured by the method of the disclosure is a convex arc surface, such lead-in type interference fit pipeline external thread will be tightly engaged with the internal thread, so as to increase the reliability of the connection; also with the thread type formed by the interference fit of the disclosure, this will largely increase the safe performance and the sealing performance of the pipe connection, the number of turns of the internal thread according to the current criterion below 1/2 inch is 4-5, but the number of turns of the internal thread can be increased to more than 6 (comprising 6) through the pipe product with the lead-in type interference fit pipeline thread pair of the disclosure; not any packing is needed during using the pipe product with the thread pair of the disclosure, and a gas tightness of the pipe product is further better than the current standard, a period wherein the packing must be used in the pipe connection will be completely ended through the disclosure.

Hereinafter, above objects, technical solution and advantageous effects of the disclosure are described in detail, in connection with the accompanying drawings and the specific embodiments.

### BRIEF DESCRIPTION OF THE DRAWINGS

The specific features and performances of the disclosure will be described further by way of the following embodiments and the accompanying drawings thereof.
FIG. 1 is a half cross-section view of one embodiment of the lead-in type interference fit pipeline external thread of the disclosure.
FIG. 2 is a partial enlarged view at A of FIG. 1.
FIG. 3 is a half cross-section view of the lead-in type interference fit pipeline external thread in prior art.
FIG. 4 is a partial enlarged view at B of FIG. 3.
FIG. 5 is a schematic view of one embodiment of the thread rolling wheel of the thread rolling machine according to the disclosure.
FIG. 6 is a half cross-section view of one embodiment of the thread rolling wheel according to the disclosure.
FIG. 7 is a partial enlarged view at C of FIG. 6.
FIG. 8 is a half cross-section view of one embodiment of the pipe product with the lead-in type interference fit pipe thread pair according to the disclosure.
FIG. 9 is a partial enlarged view at D of FIG. 8, wherein the lead-in type interference fit pipeline external thread and the internal thread are in line contact.
FIG. 10 is a partial enlarged view at D of FIG. 8, wherein the lead-in type interference fit pipeline external thread and the internal thread are in surface contact, a clearance exists therebetween.
FIG. 11 is a partial enlarged view at D of FIG. 8, wherein the lead-in type interference fit pipeline external thread and the internal thread are in surface contact, no clearance exists therebetween.
FIG. 12 is a construction schematic view of the thread rolling machine for manufacturing the lead-in type interference fit pipeline external thread of the disclosure.
FIG. 13 is a front view of the thread rolling wheel plate of FIG. 12.
FIG. 14 is a cross-section view along line A-A of FIG. 13.

### DETAILED DESCRIPTION

Hereinafter the disclosure will be described by reference with the preferred embodiments, it should be noted that in the following description the terms used are selected from the general terms, but some terms are selected according to the judgments by the applicant, and the detail meanings thereof should be understood according to the scope intended to be revealed by the disclosure.

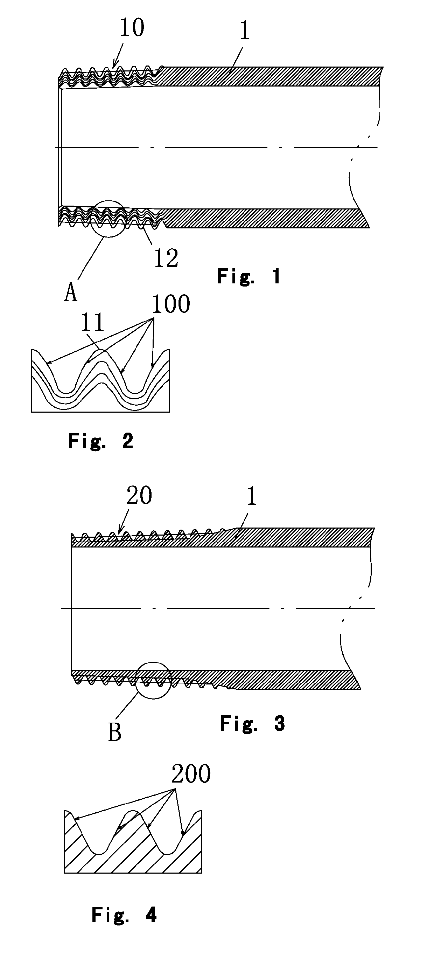

As shown in FIG. 1, a lead-in type interference fit pipeline external thread 10 according to the disclosure is formed at an adapter of a pipeline 1, the lead-in type interference fit pipeline external thread 10 is a taper pipe thread, which comprises 8 turns of useful threads, the embodiment shown in FIG. 1 is adapted to a connection with pipe thread in general circumstance, and in the circumstance such as in the astronautics field in which the connection strength is required to be higher, the number of turns of useful thread of the lead-in type interference fit pipeline external thread 10 can be 20. Further more, the number of turns of the useful thread of the lead-in type interference fit pipeline external thread according to the disclosure is not limited to a specific number.

At the same time, referring to FIG. 2, there are two turns of complete variation convex threads in the full length of the 8 turns of useful thread, said variation convex threads are different from the other threads (hereinafter referred to regular threads), said variation convex threads are shown in FIG. 2 in an enlarge view, and denoted with reference number 11, the regular threads are denoted with reference number 12 in FIG. 1. The regular thread 12 is a standard taper thread, such as a thread formed at a pipeline adapter with a conicity of 1:16. The 'variation' point of the variation convex thread 11 is that it is not formed on the pipeline surface with standard conicity as the regular thread 12, to facilitate description, the reference standard taper thread is defined as the regular thread corresponding to the variation convex thread 11 (or the variation concave thread 60 mentioned hereinafter), i.e. the imaginary regular thread at the same location as the variation convex thread 11, and is formed on the same pipeline surface with a standard conicity as the regular thread 12, for example in FIG. 1, the lead-in type interference fit pipeline external thread formed after replacing the variation convex thread 11 by the reference standard taper thread corresponds to a lead-in type interference fit pipeline external thread in the prior art. The difference between the variation convex thread 11 and the regular thread 12 can be illustrated with the difference between the variation convex thread 11 and the reference standard taper thread: a major diameter of the variation convex thread 11 is lager than a major diameter of the reference standard taper thread by a predetermined interference fit amount, and a minor diameter of the variation convex thread 11 is smaller than a minor diameter of the reference standard taper thread by said interference fit amount, or a pitch diameter of the variation convex thread 11 is lager than a pitch diameter of the reference standard taper thread by the predetermined interference fit amount; and a flank 100 of the variation convex thread 11 is a convex arc surface.

In the embodiment, said standard conicity is 1:16, and said predetermined interference fit amount is 0.01 mm-0.03mm, said variation convex threads are the third and fourth turns of threads from a small end of said useful thread, or the fourth and fifth turns of threads therefrom. However, the embodiment of the disclosure is not limited to these specific numbers, according to the practice condition, said interference fit amount can be increased, for example, the interference fit amount is 0.05mm, or when the number of turns of said useful thread is 20, the number of turns of the variation convex threads can be 5-6, as the number of turns of the variation convex threads is about 20%-30% of the number of turns of the useful thread. The meaning of 'full length of the useful thread' illustrated above or follow can be understood as: the location in the useful thread except for the two ends (the big end and the small end) of the useful thread.

FIG. 3 and FIG. 4 show the lead-in type interference fit pipeline external thread in the prior art, in which the cross section of a flank 200 of each turn of thread is formed as linear. In connection with FIG. 2 and FIG. 4, the difference between the lead-in type interference fit pipeline external thread of the disclosure and that of the prior art is apparent through comparing the two figures, and the advantages resulted therefrom will be described below in detail .

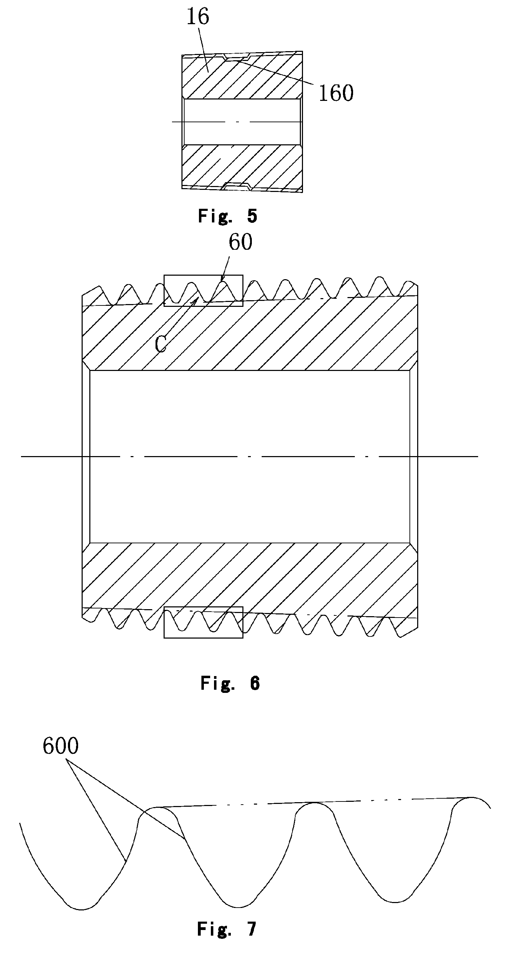

FIG. 5 schematically shows a thread rolling wheel 16 for manufacturing the lead-in type interference fit pipeline external thread of the disclosure, a recessed portion 160 is formed in the middle of the thread rolling wheel 16, the recessed portion 160 is recessed 0.01 mm-0.03mm than the location illustration as a broken-line in the figure, and the recessed portion 160 is exaggeratively shown in FIG. 5, in fact the recessed portion is not so apparent. An shown in FIG. 6, a variation concave thread 60 of the recessed portion 160 of the FIG. 5 is denoted by reference number C, the variation concave thread 60 has corresponding features to the above mentioned variation convex thread 11: a major diameter of the variation concave thread 60 is smaller than a major diameter of the reference standard taper thread by the above-mentioned predetermined preset amount (to form the interference fit amount of the variation convex thread 11), and a minor diameter of the variation concave thread 60 is also smaller than a minor diameter of the reference standard taper thread by said above-mentioned preset amount, or a pitch diameter of the variation concave thread 60 is smaller than a pitch diameter of the reference standard taper thread by said above-mentioned preset amount, preferably said standard conicity is 1:16, and said above mentioned preset amount is 0.01 mm-0.03mm; and as shown in FIG. 7, a flank 600 of the variation concave thread 60 is a concave arc surface. In this manner, the above mentioned lead-in type interference fit pipeline external thread 10 can be formed at the adapter of said workpiece using the thread rolling wheel 16 to roll the workpiece.

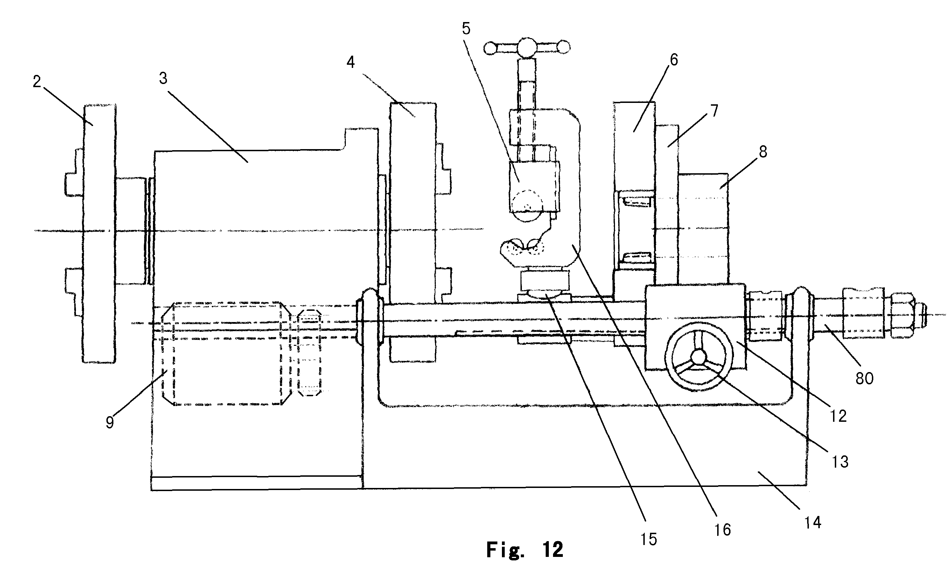

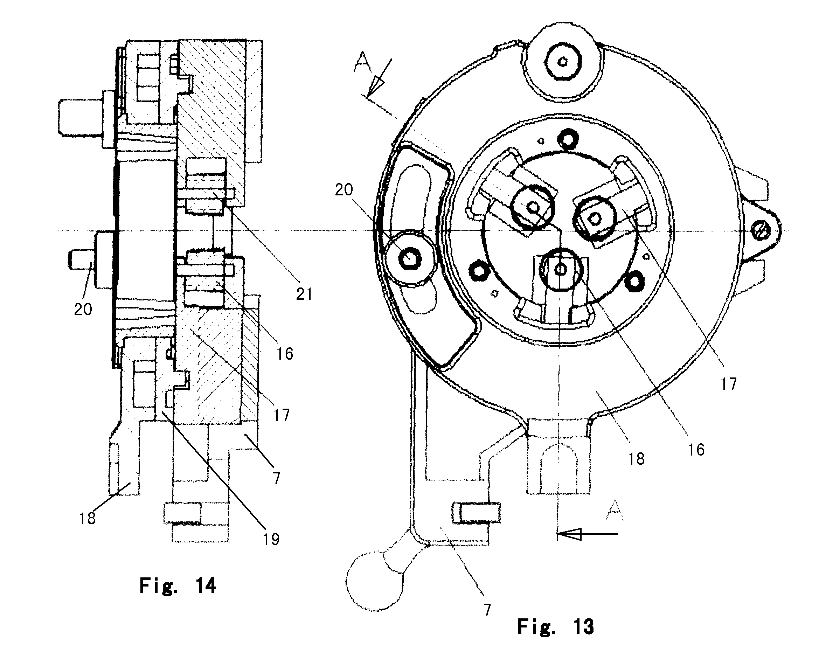

FIG. 12 and FIG. 14 show an embodiment of a thread rolling machine according to the disclosure, using the above mentioned thread rolling wheel 16 to manufacture the above mentioned lead-in type interference fit pipeline external thread 10. Hereinafter in connection with FIG. 12, FIG. 13 and FIG. 14, the thread rolling maching according to the disclosure and a method of manufacturing the lead-in type interference fit pipeline external thread of the disclosure with the thread rolling wheel of the disclosure are illustrated.

As shown in FIG. 12, the thread rolling machine comprises a machine base 14, at a side of the upper portion thereof is mounted a head stock 3 inside which a motor 9 is arranged, and a main spindle is rotated by the motor 9 through a gear change mechanism. A chuck plate 4 is arranged at the forward end of the head stock 3 to grip tubular products (workpieces) to be worked, and a rear chuck plate 2 is arranged at the rear end of the head stock 3 to facilitate gripping of long tubular products; at the other side of the upper portion of the machine base 14 two axial guiding posts 80 are mounted forward and backward along a direction parallel to a central axis of the main spindle, and a slide carriage 12 is arranged on the guiding posts 80, and a gear and a handwheel 13 are mounted on the slide carriage 12, the gear is engaged with a rack arranged on the forward axial guiding post 80, to constitute a manual moving slide carriage; a thread rolling wheel plate 6 coinciding with the main spindle is arranged at the side opposite the head stock 3 on the slide carriage 12 and comprises a base plate 7 associated with a slide carriage bracket 8, three adjustable brackets comprising a fixed base 18 and sliders 17 are arranged on the end surface of the base plate 7 along a circumferential direction, and grooves on the sliders 17 are engaged with an adjustable diameter cam plate 9 on which are arranged three identical cam tracks uniformly, each cam track interacts with the grooves of the three sliders, a handle 20 is mounted on the adjustable diameter cam plate and the adjustment of diameter is implemented by the sliding thereof. The thread rolling wheel 16 is mounted on the forward end of the slider through a pin 21 and is mounted in the slider opening to form a certain axial clearance, the sliders and the thread rolling wheels can be moved along a radial direction as the adjustable diameter cam plate is moved, to adjust different machining diameters used to roll pipe external thread having different pipe diameters, so as to constitute an adjustable thread rolling wheel plate. Further, a slider carriage 15 is mounted on the backward axial guiding post and a rotating shelf 16 is mounted on the slider carriage 15, a manual cutting knife shelf 5 used for cutting the pipe products is mounted on the rotating shelf in corresponding 180°.

A scheme to replace the above mentioned rolling method is that, a recessed portion corresponding to said complete thread of said lead-in type interference fit pipeline external thread and a concave arc surface corresponding to the flank of said complete thread are formed on a chasing tool for cutting thread, said recessed portion is recessed 0.01 mm-0.03mm, then the workpieces are cut to form said lead-in type interference fit pipeline external thread at the adapters of said workpieces. The above mentioned cutting process can be completed by a known cutting process, so it is not needed to give unnecessary details here.

Another scheme to replace the above mentioned rolling method is that, said lead-in type interference fit pipeline external thread is manufactured by a numerically controlled lathe or a numerically controlled grinder, in this case the cutting feed path of the cutter is needed to be changed on the corresponding locations of the workpieces having the variation convex thread to be cut or to be grinded, and such method is particularly adapted to the workpieces having larger diameters.

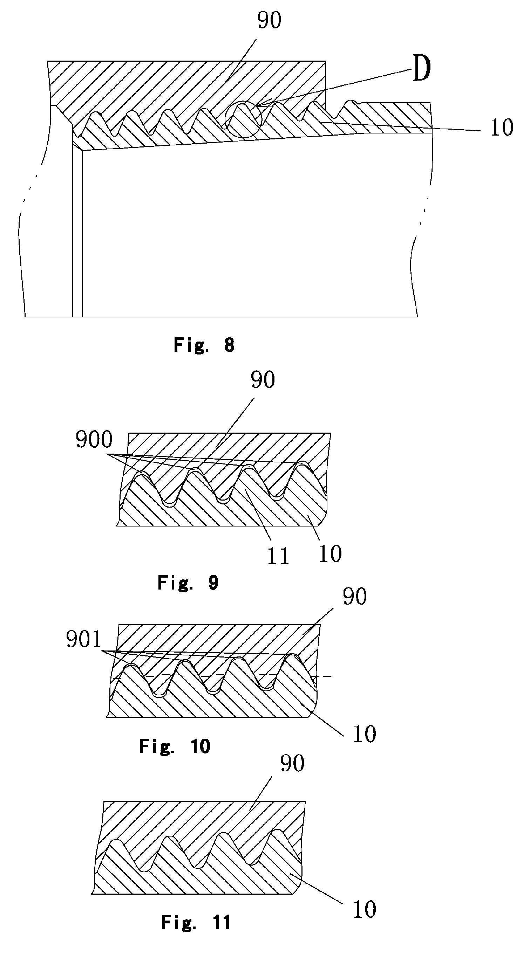

FIG. 8 shows a pipe product with lead-in type interference fit pipe thread pair with cone-cone engaging, comprising the lead-in type interference fit pipeline external thread 10 having above mentioned features and an internal thread 90 engaged therewith, the taper pipe thread is used to illustrate the internal thread 90 herein, but the internal thread 90 is not limited to the taper pipe thread and it can be a parallel internal thread, even it can be any other standard internal thread, preferably the number of turns of the useful thread of the internal thread 10 is not less than 6. It is worth noting that, the lead-in type interference fit pipeline external thread of the disclosure can be constituted to the pipe product with lead-in type interference fit pipe thread pair without changing the prior internal thread.

FIG. 9 to FIG. 11 show a previous stage, a later stage and a final stage in the mounting process of the variation convex thread 11 of the lead-in type interference fit pipeline external thread 10 and the internal thread 90. As shown in FIG. 9, in the previous stage of the mounting process, the flank of the variation convex thread 11 of the lead-in type interference fit pipeline external thread 10 is in contact with the flank of the internal thread 90 to form line contact before a crest is in contact with a root, at this time a clearance 900 is formed between the crest and the root, and between the flank and the flank. As shown in FIG. 10, as an external torque is increased, a spreading pressure is formed on the convex arc surface on the flank of the variation convex thread 11, so that the contact surfaces are compressed each other and are increased progressively to form a surface contact. As shown in FIG. 11, if the external torque is increased further, there is no clearance existing between the variation convex thread 11 of the lead-in type interference fit pipeline external thread 10 and the internal thread 90, so that not any packing will be needed to achieve the connection between the lead-in type interference fit pipeline external thread 10 and the internal thread 90. Further, if galvanizing coatings of the workpieces are maintained after the lead-in type interference fit pipeline external thread 10 is manufactured by rolling, during assembling process of the lead-in type interference fit pipeline external thread 10 and the internal thread 90, the galvanizing coatings are developed as lubricant, and as the time elapses, a rigid rebound exists after metal's plastic deformation and the volume of the galvanizing coatings is increased further by being oxidated, so as to increase the sealing effect further.

Although the preferable embodiments are used to describe the disclosure, they are not intended to limit the scope of the disclosure, so it should be understood to any skilled in the art that other equivalent variations or replacements could be made thereto without departing from the spirit and scope of the disclosure, for example, the above mentioned lead-in type interference fit pipeline external thread 10 can not only be the variation of the sealing pipe thread with the thread angle of 60° (difference thereof is the variation convex thread), but also be the variation of the sealing pipe thread with the thread angle of 55° (difference thereof is the variation convex thread). Consequently, the protection scope of the disclosure is on the basis of the scope limited by the appended claims.

## Claims

1. A lead-in type interference fit pipeline external thread, a useful thread thereof is a taper pipe thread, **characterized in that**, there are at least two turns of complete variation convex threads in the full length of the useful thread, a pitch diameter of the variation convex thread is larger than that of a corresponding reference standard taper thread by a predetermined interference fit amount, a flank of the variation convex thread is a convex arc surface.

2. The lead-in type interference fit pipeline external thread according to claim 1, wherein a standard conicity of the reference standard taper thread is 1:16, and the interference fit amount is 0.01 mm-0.03mm.

3. The lead-in type interference fit pipeline external thread according to claim 1, wherein the number of turns of the useful thread is 8 or other number, and the variation convex threads are the third and fourth turns of threads from a small end of the useful thread, or the fourth and fifth turns of threads, or the other turns of threads that need to be seal-engaged.

4. A pipe product with a lead-in type interference fit pipe thread pair, comprising a lead-in type interference fit pipeline external thread and an internal thread engaged therewith, a useful thread of the lead-in type interference fit pipeline external thread is a taper pipe thread, and the internal thread is a taper pipe thread, **characterized in that**, there are at least two turns of variation convex threads in the full length of the useful thread, a pitch diameter of the variation convex thread is larger than that of a corresponding reference standard taper thread by a predetermined interference fit amount, a flank of the variation convex thread is a convex arc surface, and the flank of the variation convex thread of the lead-in type interference fit pipeline external thread is in surface contact with a flank of the internal thread, so that the lead-in type interference fit pipeline external thread and the internal thread are in interference fit.

5. The pipe product with the lead-in type interference fit pipe thread pair according to claim 4, wherein a standard conicity of the reference standard taper thread is 1:16, and the interference fit amount is 0.01 mm-0.03mm.

6. The pipe product with the lead-in type interference fit pipe thread pair according to claim 4, wherein the number of turns of the useful thread is 8 or more than 8 or less than 8, the number of turns of the useful thread of the internal thread is not less than 6, and the variation convex threads are the third and fourth turns of threads from a small end of the useful thread, or the fourth and fifth turns of threads.

7. A thread rolling machine for manufacturing the lead-in type interference fit pipeline external thread according to claim 1, comprising a machine base, a head stock arranged on a side of a upper portion of the machine base, a chuck plate arranged on a forward end of the head stock, a moving means arranged on the other side of the upper portion of the machine base and a thread rolling wheel plate arranged on the moving means, the thread rolling wheel plate comprises a fixed bracket, at least one thread rolling wheel arranged on the fixed bracket and a location adjustment mechanism for adjusting a radial location of the thread rolling wheel on the fixed base, and a useful thread of the thread rolling wheel is a taper pipe thread, **characterized in that**, there are at least two turns of variation concave threads in the full length of the useful thread, a pitch diameter of the variation concave thread is smaller than that of a corresponding reference standard taper thread by a predetermined interference fit amount, a flank of the variation concave thread is a concave arc surface,

8. The thread rolling machine for manufacturing the lead-in type interference fit pipeline external thread according to claim 7, wherein a standard conicity of the reference standard taper thread is 1:16, and the interference fit amount is 0.01 mm-0.03mm.

9. A method for manufacturing the lead-in type interference fit pipeline external thread according to claim 1, **characterized in that**, the thread rolling wheel according to claim 7 is used to roll a workpiece, so that the lead-in type interference fit pipeline external thread can be formed at an adapter of the workpiece.

10. A method for manufacturing the lead-in type interference fit pipeline external thread according to claim 1, wherein a recessed portion corresponding to the variation convex thread of the lead-in type interference fit pipeline external thread and a concave arc surface corresponding to the flank of the variation convex thread are formed on a chasing tool for cutting thread, the recessed portion is recessed 0.01 mm-0.03mm, then the workpiece is cut to form the lead-in type interference fit pipeline external thread at the adapter of the workpiece.

11. A thread rolling wheel, a useful thread thereof is a taper pipe thread, **characterized in that**, there are at least two turns of complete variation concave threads in the full length of the useful thread, a pitch diameter of the variation concave thread is smaller than a corresponding reference standard taper thread by a predetermined preset amount, a flank of the variation concave thread is a concave arc surface.

12. The thread rolling wheel according to claim 11, wherein a standard conicity of the reference standard taper thread is 1:16, there are at least two turns of variation concave threads in the full length of the useful thread, and the pitch diameter of the variation concave thread is smaller than the corresponding reference standard taper thread by 0.01 mm-0.03mm or by other preset amount meeting certain requirements of interference fit.
